# FASCICULE DE BREVET EUROPEEN

(11) **EP 0 842 220 B1**
(45) Date de publication et mention de la délivrance du brevet: **13.10.1999**
(21) Numéro de dépôt: 97921996.1
(22) Date de dépôt: 03.06.1997
(51) Int. Cl.: C08K 5/11, C08L 27/06

(54) **UTILISATION D'UN AGENT CHIMIQUE POUR AUGMENTER LA RESISTANCE A L'IRRADIATION DES COMPOSITIONS DE CHLORURE DE POLYVINYLE**
VERWENDUNG EINES CHEMISCHEN MITTELS ZUR ERHÖHUNG DER STRAHLENBESTÄNDIGKEIT VON POLYVINYLCHLORID-ZUSAMMENSETZUNGEN
USE OF A CHEMICAL AGENT FOR INCREASING RADIATION RESISTANCE OF POLYVINYL CHLORIDE COMPOSITIONS

(30) Priorité: 04.06.1996 IT TO960483
(43) Date de publication de la demande: 20.05.1998
(73) Titulaire: HOSPAL AG, 4008 Basel (CH)
(72) Inventeur: NERI, Roberto, I-41037 Mirandola (IT)
(74) Mandataire: Tilloy, Anne-Marie
(86) Numéro de dépôt international: IB9700634
(87) Numéro de publication internationale: WO9746613

(56) Documents cités:
- EP-A- 0 345 662
- FR-A- 2 311 801
- FR-A- 2 370 769
- FR-A- 2 439 589

## Description

La présente invention a pour objet l'utilisation d'un agent chimique dans des compositions de chlorure de polyvinyle (PVC) plastifié, destinée à la réalisation de produits en matériau biocompatible, en particulier des lignes à sang, des raccords et des conteneurs, utilisés, par exemple, dans les transfusions et les dialyses, pour augmenter la résistance à l'irradiation de ces produits en matériau biocompatible sans nuire à leur biocompatibilité.

Comme chacun sait, le PVC est un matériau polymère de très vaste emploi dans de nombreux domaines de la technique : pratiquement dans chacune de ses applications, il ne s'utilise cependant pas tel quel, mais en association avec une série d'additifs, en particulier des plastifiants, stabilisants et lubrifiants, qui en améliorent les caractéristiques mécaniques, la stabilité et l'usinabilité.

Dans le domaine médical, et en particulier pour la réalisation de l'ensemble des dispositifs, circuits et conteneurs destinés au traitement du sang et de ses dérivés, l'utilisation de PVC plastifié avec du di(2-éthylhexyl)phtalate (communément désigné par DOP) est connue.

Bien que le DOP soit le plastifiant prévu par la Pharmacopée Officielle Italienne, il a été, à plusieurs reprises, l'objet de discussions inhérentes aux contre-indications de caractère toxicologique liées à son emploi. Il est clair que l'utilisation, dans le domaine médical, d'un quelconque matériau, ne peut pas faire abstraction de l'évaluation de ses éventuels aspects toxicologiques (c'est-à-dire de sa biocompatibilité).

On connaît également l'utilisation d'un autre plastifiant, le tri(2-éthylhexyl)trimellitate (TOTM), dont la biocompatibilité a été expérimentalement vérifiée.

Les compositions précitées de PVC plastifié pour les produits en matériau biocompatible présentent cependant le principal inconvénient de subir des altérations structurelles quand elles sont soumises à des irradiations de rayons pénétrants, comme cela se produit, par exemple, si le produit réalisé à partir de celles-ci subit une stérilisation aux rayons gamma ou bêta.

On sait, en effet, que les produits à usage médical réalisés en PVC plastifié doivent être stérilisés avant leur utilisation. Les méthodes de stérilisation normalement utilisées sont le procédé à l'oxyde d'éthylène (ci-après désigné sous forme abrégée par stérilisation ETO) et l'irradiation de rayons pénétrants de type rayons gamma ou bêta (ci-après désignée comme stérilisation gamma ou stérilisation bêta).

Les stérilisations gamma et bêta, quoique très efficaces du point de vue du degré de stérilisation obtenu, produisent, sur les compositions de PVC plastifié précitées, des altérations structurelles avec un dégagement possible de substances volatiles, qui se manifestent typiquement par le jaunissement du matériel. Le phénomène est plus marqué avec les compositions classiques avec du DOP, si bien que normalement, pour ces matériels, on a recourt à la stérilisation ETO, mais on l'observe également, bien qu'en moindre mesure, avec les matériaux contenant du TOTM.

On connaît également, d'après le brevet US-4,222,379, une composition de PVC plastifié avec du di(2-éthylhexyl)-adipate dont l'utilisation est limitée à la réalisation de sacs donneurs pour sang. En effet, selon ce brevet, le di(2-éthylhexyl)adipate est extractible et conduit à une diminution non négligeable de la quantité plasmatique en hémoglobine lors du stockage du sang dans des sacs en PVC renfermant ce plastifiant. C'est pourquoi, il est recommandé, dans ce brevet, de limiter le contact du sang avec des produits en PVC renfermant ce plastifiant. En outre, on préconise pour ces sacs donneurs pour sang en PVC plastifié la stérilisation à la vapeur (en autoclave).

Un premier objet de la présente invention est donc de résoudre les problèmes précités rencontrés avec des produits à usage médical réalisés en PVC et stérilisés par irradiations de rayons pénétrants de type rayons gamma ou bêta.

De manière surprenante, on a trouvé qu'il est possible de réduire notablement la tendance aux altérations structurelles induites par l'irradiation de rayons pénétrants de type rayons gamma ou bêta d'une composition de chlorure de polyvinyle (PVC) plastifié, adaptée à la réalisation de produits en matériau biocompatible, tels que des lignes à sang, des raccords et des conteneurs en incorporant dans cette composition au moins un ester alkylique de l'acide adipique, de préférence le di(2-éthylhexyl)-adipate, communément désigné DOA.

De manière bien connue en soi, l'ester alkylique de l'acide adipique, plus particulièrement le DOA, sert également de plastifiant de la composition de PVC.

Avantageusement, la composition PVC comprend, en outre, au moins un lubrifiant-stabilisant, au moins un stabilisant et au moins un lubrifiant, tous de type connu.

De cette manière, on obtient en même temps un bon effet plastifiant, qui permet d'avoir une bonne usinabilité de la composition et de bonnes propriétés mécaniques des produits réalisés, en particulier des lignes à sang, et une faible tendance du matériau à subir des altérations par effet des radiations; ainsi, l'aspect extérieur des lignes à sang réalisées avec la composition selon l'invention se trouve, par conséquent, résolument amélioré par rapport à celui des lignes actuelles, la coloration jaunâtre prise après l'irradiation étant inexistante et la coloration étant plus stable dans le temps; l'odeur également perceptible immédiatement après l'ouverture du blister dans lequel sont contenues les lignes s'avère moins perceptible et intense que celle obtenue avec les lignes actuelles, probablement en confirmation d'un développement moindre de substances volatiles provoqué par les irradiations. En outre, la composition de PVC plastifié selon l'invention est meilleure que les compositions actuellement utilisées du point de vue de la biocompatibilité.

L'invention a également pour objet un procédé pour augmenter substantiellement la résistance aux irradiations de rayons pénétrants de type rayons gamma ou bêta de produits en matériau biocompatible à base d'une composition de PVC plastifié sans nuire à leur biocompatibilité, caractérisé en ce que l'on incorpore au moins un ester alkylique de l'acide adipique dans la composition de PVC.

De préférence, ce procédé comprend principalement les étapes de :
a) incorporer dans une composition de PVC plastifié au moins un ester alkylique de l'acide adipique, de préférence le di(2-éthylhexyl)-adipate (DOA). Cette composition de PVC comprend avantageusement, en outre, au moins un lubrifiant-stabilisant, au moins un stabilisant et au moins un lubrifiant ;
b) si nécessaire, extruder et réduire en granulés la composition de PVC plastifié ;
c) fabriquer, à partir de la composition de PVC, généralement par extrusion et/ou moulage, un produit en matériau biocompatible, en particulier des lignes à sang ou bien des raccords et des conteneurs, utilisés, par exemple, dans les transfusions et les dialyses ;
d) stériliser le produit en matériau biocompatible obtenu, de préférence par irradiation de rayons pénétrants.

La composition de PVC selon l'invention est conforme à ce qui est indiqué par la Pharmacopée Italienne et Européenne pour la réalisation de conteneurs pour sang humain et ses fractions, à l'exception du fait de contenir comme plastifiant, au lieu du DOP prévu par la Pharmacopée, le DOA, qui cependant apparaît dans l'annexe II section 1 partie B de la directive n° 220 du 26 Avril 1993 (mise à jour de la directive du 21 Mars 1973 et acceptation formelle des directives CEE) et s'avère donc conforme au moins aux exigences requises par les normes italiennes et européennes sur les matériaux plastiques destinés au contact alimentaire.

C'est pourquoi la composition selon l'invention a été soumise non seulement à des tests comparatifs avec d'autres compositions de PVC commerciales pour un usage analogue, mais également à une série d'essais chimico-biologiques pour en vérifier la biocompatibilité. Comme chacun sait, la biocompatibilité d'un matériau plastique (ou d'un instrument médical, par exemple une ligne à sang, réalisé avec ce matériau) est évaluée par l'intermédiaire d'une qualification chimico-biologique qui a pour objet d'évaluer et de mesurer les substances dégagées par le matériau et/ou par ses composants solubles (analyse chimique) et les éventuelles potentialités toxiques de ces substances (analyse biologique).

La qualification des matériaux en PVC plastifié avec DOA et des produits, en particulier les lignes à sang, réalisés avec ces matériaux a été menée conformément aux procédures recommandées par les normes officielles nationales et/ou internationales.

Dans le cadre de l'invention, la composition de PVC comprend avantageusement, en pourcentage de son poids total :
- 50 à 75 % de résine de PVC ;
- 20 à 45 % d'au moins un plastifiant choisi parmi les esters alkyliques de l'acide adipique ;
- 2,5 à 4,5 % d'au moins un lubrifiant-stabilisant choisi dans le groupe des triglycérides époxydés ;
- 0,6 à 1,5 % d'un ou de plusieurs stabilisants choisis dans le groupe des sels de calcium et de zinc ;
- 0 à 0,1 % de cires polyoléfiniques ;
- et 0,05 à 0,5 % d'esters de pentaérythritol.

Selon un mode de réalisation préféré de l'invention, la composition comprend, en pourcentage de son poids total :
- 50 à 75 % de résine de PVC ;
- 20 à 45 % de di-(2-éthylhexyl)adipate (DOA) ;
- 2,5 à 4,5 % d'huile de soja époxydée ;
- 0,6 à 1,5 % de stabilisants au calcium-zinc ;
- 0 à 0,1 % de cire polyoléfinique ;
- et 0,05 à 0,5 % de pentaérythritol-adipate-oléate.

A titre d'exemple de compositions de PVC, on peut citer :
- une première composition de PVC comprenant, en pourcentage de son poids total :
   - 63,34 % de résine PVC (PVC K70) fabriquée par la société E.V.C.,
   - 32,62 % de di(2-éthylhexyl)adipate (DOA),
   - 3,18 % d'huile de soja époxydée fabriquée par CIBA GEIGY,
   - 0,76 % de sels de calcium et de zinc, à titre de stabilisant,
   - 0,1 % de pentaérythritol-adipate-oléate.
- une seconde composition de PVC comprenant, en pourcentage de son poids total:
   - 55,14 % de résine PVC (PVC K80) fabriquée par la société E.V.C.,
   - 41,35 % de di(2-éthylhexyl)adipate (DOA),
   - 2,76 % d'huile de soja époxydée fabriquée par CIBA GEIGY,
   - 0,66 % de sels de calcium et de zinc, à titre de stabilisant,
   - 0,09 % de pentaérythritol-adipate-oléate.

Les sels de calcium et de zinc peuvent être un mélange de stéarate de calcium et de stéarate de zinc ou un mélange de stéarate de calcium et d'octanoate de zinc.

La composition est généralement obtenue par extrusion et réduction successive en granulés des composants, mélangés dans les pourcentages indiqués ci-dessus.

D'autres caractéristiques et avantages de la présente invention apparaîtront clairement d'après la description qui suit de certains exemples, non limitatifs, de sa mise en oeuvre, avec référence aux dessins annexés, dans lesquels :

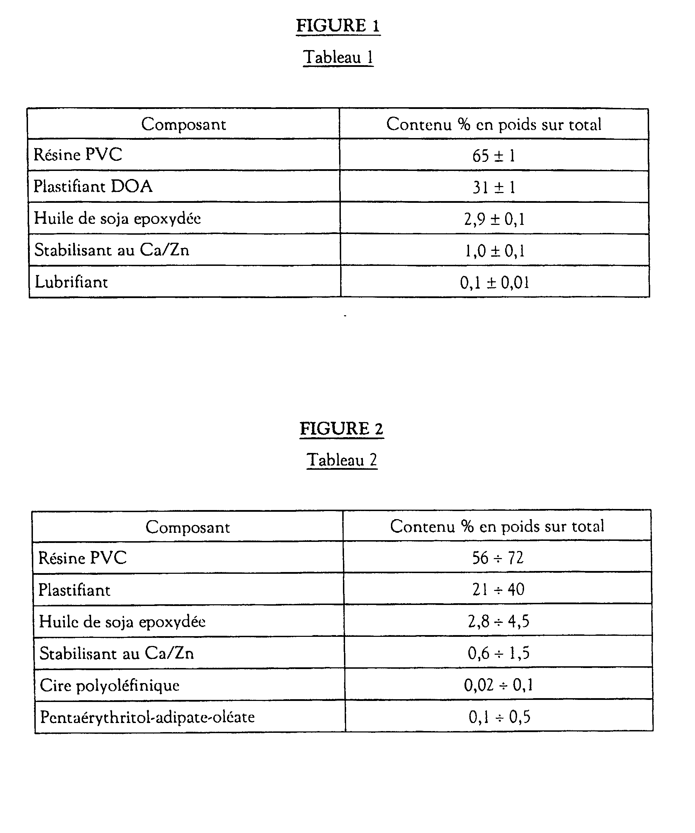

- la figure 1 contient le tableau 1 qui indique une composition selon l'invention, exprimée en pourcentage sur le poids total;
- la figure 2 contient le tableau 2 qui indique les valeurs minimum et maximum des composants constituant une forme préférée de mise en oeuvre de l'invention, exprimées en pourcentage sur le poids total;

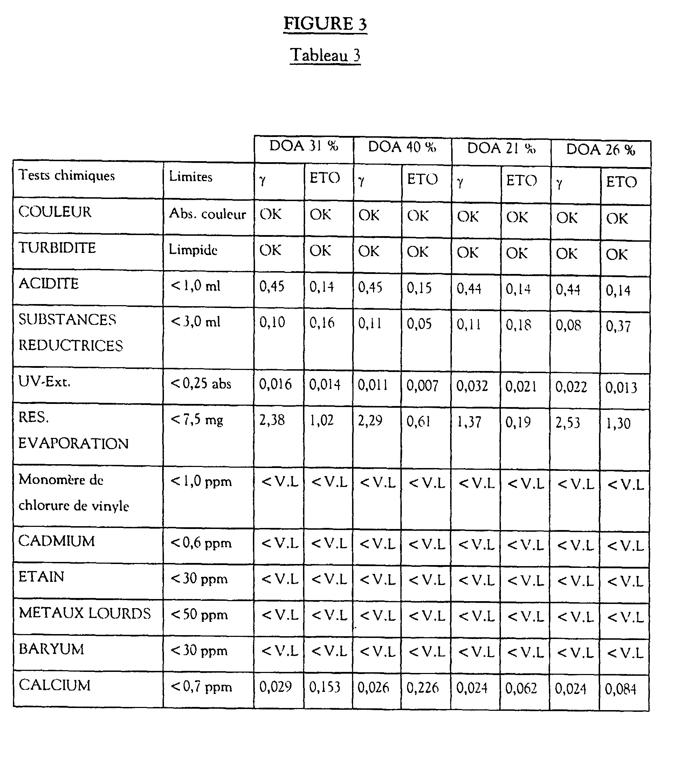

- la figure 3 contient le tableau 3 qui indique les résultats des tests chimiques prévus par la Pharmacopée Officielle Européenne réalisés sur des échantillons de quatre compositions de PVC comprises dans les limites du tableau 2 et contenant une teneur différente de plastifiant, en partie stérilisées à l'oxyde d'éthylène et en partie stérilisées aux rayons gamma;

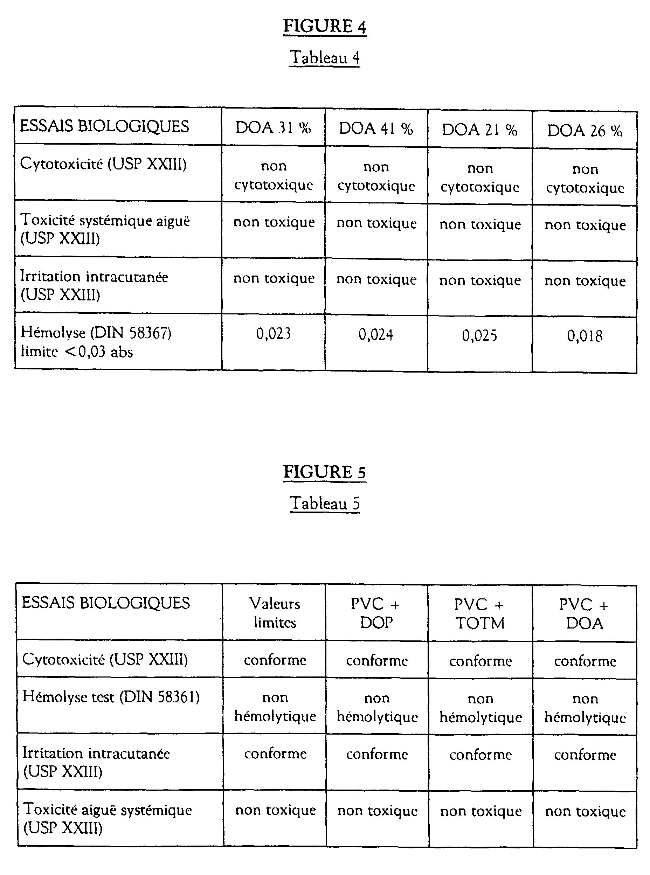

- la figure 4 contient le tableau 4 qui résume les résultats de la qualification biologique menée sur des échantillons de quatre compositions de PVC comprises dans les limites du tableau 2 et contenant une teneur différente de plastifiant, stérilisées aux rayons gamma.
- la figure 5 contient le tableau 5 qui indique les résultats les plus significatifs de la qualification biologique de comparaison menée sur des échantillons d'une composition de PVC plastifié selon l'invention et des échantillons de compositions commerciales analogues, toutes stérilisées aux rayons gamma;

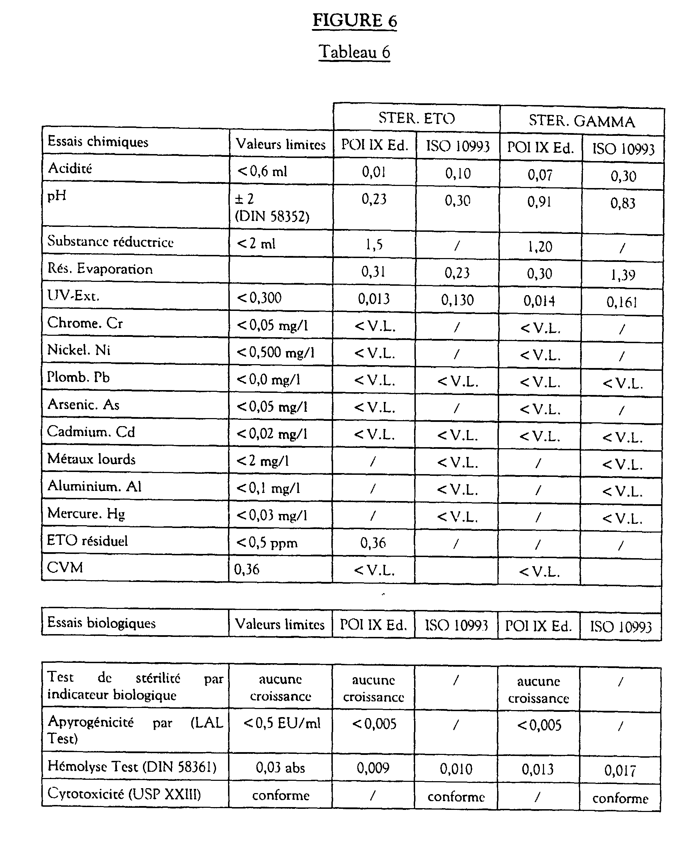

- la figure 6 contient le tableau 6 qui indique les résultats de la qualification chimico-biologique menée selon la Pharmacopée Officielle Italienne et la norme ISO-10093-1 sur les composants des ligncs à sang réalisés à partir d'une composition de PVC selon l'invention, en partie stérilisées à l'oxyde d'éthylène et en partie stérilisée aux rayons gamma;

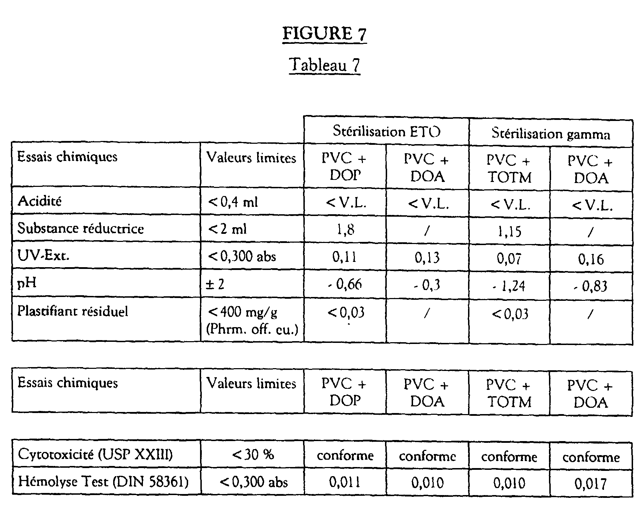

- la figure 7 contient le tableau 7 qui indique les résultats les plus significatifs de la qualification chimico-biologique de comparaison menée sur des composants des lignes à sang réalisés selon une composition de PVC plastifié selon l'invention et des composants analogues réalisés selon des compositions commerciales, toutes stérilisées aux rayons gamma.

### EXEMPLE 1

En procédant selon les notes technologiques d'usinage du PVC (mélange, extrusion et réduction en granulés), une première composition de PVC plastifié a été préparée, selon la composition indiquée dans le tableau 1, et en particulier une teneur de plastifiant (DOA) de 31 % en poids sur le total. Trois autres compositions ont été ensuite préparées, en faisant varier, par rapport à la précédente, le pourcentage de la teneur de plastifiant (et celui des autres composants par conséquent) : en définitive, quatre compositions ont été considérées essentiellement caractérisées par une teneur différente de plastifiant (précisément 21%, 26%, 31% et 40% en poids sur le total) et qui couvrent les domaines indiqués dans le tableau 2.

Des échantillons de chaque matériau ont été soumis à un cycle de stérilisation à l'oxyde d'éthylène, selon les procédures habituellement appliquées. D'autres échantillons de chaque matériau ont été soumis à un cycle de stérilisation aux rayons gamma, à la dose minimum de 25 kGy. Les échantillons ont été ensuite qualifiés du point de vue chimique et biologique, conformément aux procédures internationales. Plus particulièrement, des essais chimiques ont été effectués sur tous les échantillons (aussi bien ceux stérilisés ETO que ceux stérilisés gamma) selon la Pharmacopée Officielle Européenne (chapitre VI, paragraphe 1.2.1.2. : "Materials based on plasticised polyvinylchloride for tubing used in set for transfusion of blood and blood components") et, en parallèle, selon la norme la plus sévère DIN 58352 (Part 3: "Extracorporeal circuit, hemodialysis, dialyzers and bloodline systems made of plastics; requirements and testing"); en outre, des essais biologiques ont été exécutés sur uniquement des échantillons stérilisés gamma (ceci étant le traitement le plus sévère du point de vue de la toxicité).

Le tableau 3 indique les résultats de la qualification chimique effectuée selon la Pharmacopée Officielle Européenne aussi bien sur des échantillons stérilisés ETO que sur des échantillons stérilisés gamma.

Comme on peut le noter, tous les matériaux s'avèrent conformes à la Pharmacopée Officielle Européenne.

Tous les matériaux, en outre, réussissent les essais biologiques appliqués, dont les résultats sont indiqués dans le tableau 4.

### EXEMPLE 2

Une qualification chimico-biologique de comparaison a été réalisée entre les compositions de PVC analogues mais contenant comme plastifiant respectivement DOA, DOP et TOTM, en quantités telles qu'elles permettent l'obtention des mêmes caractéristiques fonctionnelles. Les échantillons du matériau obtenu selon les modalités décrites dans l'exemple 1 avec la plus forte teneur de plastifiant (40% de DOA), soumis à la stérilisation gamma, ont été pris en compte parce qu'estimés plus significatifs. L'analyse a été effectuée selon lcs procédures indiquées dans l'exemple 1 et les résultats sont indiqués dans le tableau 5.

Comme on peut le noter, le PVC plastifié avec DOA présente, en ce qui concerne les essais chimiques et biologiques appliqués, un comportement tout à fait équivalent aux compositions connues.

### EXEMPLE 3

Certaines lignes à sang ont été produites avec le matériau à plus forte teneur de plastifiant obtenu selon les modalités indiquées dans l'exemple 1, sans que des inconvénients de caractère technologique aient été vérifiés. Une partie des lignes à sang réalisées selon chaque formulation a donc été soumise à un cycle de stérilisation à l'oxyde d'éthylène, selon les procédures habituellement appliquées, et une partie a été soumise à un cycle de stérilisation aux rayons gamma, à la dose minimum de 25 kGy. Une qualification chimico-biologique a été effectuée sur les lignes à sang, conformément à la Pharmacopée Officielle Italienne (IX éd., Vol. 1: "Linee ematiche") et la norme ISO 10993-1 ("Biological evaluation of medical devices, part 1: guidance on selection of tests"). Les résultats sont indiqués dans le tableau 6. Toutes les lignes à sang se sont révélées conformes à la Pharmacopée Officielle Italienne, IX éd. et à la norme ISO 10993.

### EXEMPLE 4

Une qualification chimico-biologique de comparaison a été effectuée entre les lignes à sang réalisées comme indiqué dans l'exemple 3 et les lignes à sang réalisées selon les compositions connues. Comme déjà dit, actuellement les lignes à sang en PVC plastifié avec DOP sont stérilisées à l'oxyde d'éthylène, tandis que celles en PVC plastifié avec TOTM sont stérilisées aux rayons gamma. On a donc considéré des lignes à sang réalisées en PVC plastifié avec DOP et stérilisées ETO, et des lignes à sang réalisées en PVC plastifié avec TOTM et stérilisées gamma: la comparaison a été faite avec des lignes à sang réalisées en PVC selon l'invention, stérilisées de la même manière. Les résultats sont indiqués dans le tableau 7.

La comparaison avec les lignes à sang actuellement utilisées ne révèle pas de différences significatives dans les aspects toxico-chimiques considérés. L'aspect extérieur des lignes à sang réalisées selon la composition de PVC de l'invention et stérilisées gamma s'est avéré résolument meilleur que celui des lignes à sang actuellement produites stérilisées de la même manière, qui utilisent le TOTM: la coloration prise après l'irradiation est en effet beaucoup moins intense et plus stable dans le temps. L'odeur perceptible immédiatement après l'ouverture du blister des lignes actuelles avec TOTM, en outre, n'est plus aussi remarquable et perceptible après l'ouverture du blister des lignes avec DOA. Cela est à mettre en rapport avec une moindre formation et développement de substances volatiles, communément tenues responsables de la mauvaise odeur outre les effets irritatifs de la peau et des muqueuses manifestés par certains patients.

En définitive, les lignes à sang réalisées selon la composition de l'invention se révèlent meilleures que celles actuellement sur le marché, aussi bien du point de vue technologique que du point de vue de la biocompatibilité; par rapport aux compositions connues, en outre, on note une moindre tendance aux altérations induites par le processus de stérilisation aux rayons gamma.

Enfin, il est clair que des modifications et des perfectionnements peuvent être apportés à la composition décrite, qui ne sortent pas du cadre de la présente invention.

## Revendications

1. Utilisation d'une composition de chlorure de polyvinyle (PVC) contenant, en pourcentage de son poids total :
- 50 à 75 % de résine de PVC ;
- 20 à 45 % d'au moins un ester alkylique de l'acide adipique ;
- 2,5 à 4,5 % d'au moins un lubrifiant-stabilisant choisi dans le groupe des triglycérides époxydés ;
- 0,6 à 1,5 % d'un ou de plusieurs stabilisants choisis dans le groupe des sels de calcium et de zinc ;
- 0 à 0,1 % de cires polyoléfiniques ;
- et 0,05 à 0,5 % d'esters de pentaérythritol.
pour la réalisation de produits en matériau biocompatible, en particulier des lignes à sang, pour augmenter la résistance à l'irradiation aux rayons pénétrants de ces produits.

2. Utilisation selon la revendication 1, caractérisée en ce que la composition de PVC contient, en pourcentage de son poids total :
- 50 à 75 % de résine de PVC ;
- 20 à 45 % de di-(2-éthylhexyl)adipate ;
- 2,5 à 4,5 % d'huile de soja époxydée ;
- 0,6 à 1,5 % d'un ou de plusieurs stabilisants choisis dans le groupe des sels de calcium et de zinc ;
- 0 à 0,1 % de cires polyoléfiniques ;
- et 0,05 à 0,5 % de pentaérythritol-adipate-oléate.

3. Utilisation selon la revendication 2, caractérisée en ce que la composition de PVC contient, en pourcentage de son poids total :
- 56 à 72 % de résine de PVC ;
- 21 à 40 % de plastifiant di-(2-éthylhexyl)adipate ;
- 2,8 à 4,5 % d'huile de soja époxydée ;
- 0,6 à 1,5 % de stabilisants choisis dans le groupe des sels de calcium et de zinc ;
- 0,02 à 0,1 % de cire polyoléfinique ;
- 0,1 à 0,5 % de pentaérythritol-adipate-oléate.

4. Utilisation selon la revendication 1, 2 ou 3 caractérisée en ce que le stabilisant est un mélange de stéarate de calcium et de stéarate de zinc.

5. Utilisation selon la revendication 1, 2 ou 3 caractérisée en ce que le stabilisant est un mélange de stéarate de calcium et d'octanoate de zinc.

6. Procédé de fabrication de produits en matériau biocompatible à résistance améliorée aux irradiations de rayons pénétrants à partir d'une composition de chlorure de polyvinyle (PVC) plastifié, caractérisé en ce qu'il comprend les étapes de :
a) préparer une composition de PVC plastifié à partir de, en pourcentage en poids rapporté au poids total de la composition :
- 50 à 75 % de résine de PVC ;
- 20 à 45 % d'au moins un ester alkylique de l'acide adipique ;
- 2,5 à 4,5 % d'au moins un lubrifiant-stabilisant choisi dans le groupe des triglycérides époxydés ;
- 0,6 à 1,5 % d'un ou de plusieurs stabilisants choisis dans le groupe des sels de calcium et de zinc ;
- 0 à 0,1 % de cires polyoléfiniques ;
- et 0,05 à 0,5 % d'esters de pentaérythritol ;
b) fabriquer un produit en matériau biocompatible à partir de la composition de PVC plastifié ;
c) stériliser le produit obtenu, de préférence par irradiation de rayons pénétrants.

7. Procédé de fabrication de produits en matériau biocompatible à résistance améliorée aux irradiations de rayons pénétrants à partir d'une composition de chlorure de polyvinyle (PVC) plastifié, caractérisé en ce qu'il comprend les étapes de :
a) préparer une composition de PVC plastifié à partir de, en pourcentage en poids rapporté au poids total de la composition :
- 50 à 75 % de résine de PVC ;
- 20 à 45 % de di-(2-éthylhexyl)adipate;
- 2,5 à 4,5 % d'huile de soja époxydée ;
- 0,6 à 1,5 % d'un ou de plusieurs stabilisants choisis dans le groupe des sels de calcium et de zinc ;
- 0 à 0,1 % de cires polyoléfiniques ;
- et 0,05 à 0,5 % de pentaérythritol-adipate-oléate.
b) fabriquer un produit en matériau biocompatible à partir de la composition de PVC plastifié ;
c) stériliser le produit obtenu, de préférence par irradiation de rayons pénétrants.

8. Procédé selon la revendication 5 ou 6, caractérisé en ce que le stabilisant est un mélange de stéarate de calcium et de stéarate de zinc.

9. Procédé selon la revendication 5 ou 6, caractérisé en ce que le stabilisant est un mélange de stéarate de calcium et d'octanoate de zinc.

10. Lignes à sang à base de composition de chlorure de polyvinyle définie dans l'une quelconque des revendications 1 à 5.

## Patentansprüche

1. Verwendung einer Polyvinylchlorid (PVC)-Zusammensetzung, die, bezogen auf ihr Gesamtgewicht, enthält
- 50 bis 75 Gew.-% PVC-Harz;
- 20 bis 45 Gew.-% mindestens eines Alkylesters der Adipinsäure;
- 2,5 bis 4,5 Gew.-% mindestens eines Stabilisierungs-Gleitmittels, ausgewählt aus der Gruppe der epoxydierten Triglyceride;
- 0,6 bis 1,5 Gew.-% eines oder mehrerer Stabilisatoren, ausgewählt aus der Gruppe der Calcium- und Zinksalze;
- 0 bis 0,1 Gew.-% Polyolefinwachse; und
- 0,05 bis 0,5 Gew.-% Pentaerythritester,
zur Herstellung von Produkten aus einem biologisch verträglichen Material, insbesondere Blutleitungen, zur Verbesserung der Beständigkeit gegen Bestrahlen mit diese Produkte durchdringenden Strahlen.

2. Verwendung nach Anspruch 1, dadurch gekennzeichnet, daß die PVC-Zusammensetzung, bezogen auf ihr Gesamtgewicht, enthält:
- 50 bis 75 Gew.-% PVC-Harz;
- 20 bis 45 Gew.-% Di-(2-ethylhexyl)adipat;
- 2,5 bis 4,5 Gew.-% epoxidiertes Sojaöl;
- 0,6 bis 1,5 Gew.-% eines oder mehrerer Stabilisatoren, ausgewählt aus der Gruppe der Calcium- und Zinksalze;
- 0 bis 0,1 Gew.-% Polyolefinwachse; und
- 0,05 bis 0,5 Gew.-% Pentaerythrit-adipatoleat.

3. Verwendung nach Anspruch 2, dadurch gekennzeichnet, daß die PVC-Zusammensetzung, bezogen auf ihr Gesamtgewicht, enthält:
- 56 bis 72 Gew.-% PVC-Harz;
- 21 bis 40 Gew.-% des Weichmachers Di-(2-ethylhexyl)adipat;
- 2,8 bis 4,5 Gew.-% epoxidiertes Sojaöl;
- 0,6 bis 1,5 Gew.-% Stabilisatoren, ausgewählt aus der Gruppe der Calcium- und Zinksalze;
- 0,02 bis 0,1 Gew.-% Polyolefinwachs; und
- 0,1 bis 0,5 Gew.-% Pentaerythrit-adipatoleat.

4. Verwendung nach Anspruch 1, 2 oder 3, dadurch gekennzeichnet, daß der Stabilisator ein Gemisch von Calciumstearat und Zinkstearat ist.

5. Verwendung nach Anspruch 1, 2 oder 3, dadurch gekennzeichnet, daß der Stabilisator ein Gemisch von Calciumstearat und Zinkoctanoat ist.

6. Verfahren zur Herstellung von Produkten aus einem biologisch verträglichen Material mit verbesserter Beständigkeit gegen Bestrahlung mit durchdringenden Strahlen aus einer plastifizierten Polyvinylchlorid (PVC)-Zusammensetzung, dadurch gekennzeichnet, daß es die Stufen umfaßt:
a) Herstellung einer plastifizierten PVC-Zusammensetzung, wobei man ausgeht, bezogen auf das Gesamtgewicht der Zusammensetzung von:
- 50 bis 75 Gew.-% PVC-Harz;
- 20 bis 45 Gew.-% mindestens eines Alkylesters der Adipinsäure;
- 2,5 bis 4,5 Gew.-% mindestens eines Stabilisator-Gleitmittels, ausgewählt aus der Gruppe der epoxidierten Triglyceride;
- 0,6 bis 1,5 Gew.-% eines oder mehrerer Stabilisatoren, ausgewählt aus der Gruppe der Calcium- und Zinksalze;
- 0 bis 0,1 Gew.-% Polyolefinwachsen; und
- 0,05 bis 0,5 Gew.-% Pentaerythritestern;
b) Herstellung eines Produkts aus einem biologisch verträglichen Material aus der plastifizierten PVC-Zusammensetzung; und
c) Sterilisieren des erhaltenen Produkts, vorzugsweise durch Bestrahlung mit durchdringenden Strahlen.

7. Verfahren zur Herstellung von Produkten aus einem biologisch verträglichen Material mit verbesserter Beständigkeit gegen Bestrahlung mit durchdringenden Strahlen aus einer plastifizierten Polyvinylchlorid (PVC)-Zusammensetzung, dadurch gekennzeichnet, daß es die Stufen umfaßt:
a) Herstellung einer plastifizierten PVC-Zusammensetzung, wobei man ausgeht, bezogen auf das Gesamtgewicht der Zusammensetzung, von:
- 50 bis 75 Gew.-% PVC-Harz;
- 20 bis 45 Gew.-% Di-(2-ethylhexyl)adipat;
- 2,5 bis 4,5 Gew.-% epoxidiertem Sojaöl;
- 0,6 bis 1,5 Gew.-% eines oder mehrerer Stabilisatoren, ausgewählt aus der Gruppe der Calcium- und Zinksalze;
- 0 bis 0,1 Gew.-% Polyolefinwachsen; und
- 0,05 bis 0,5 Gew.-% Pentaerythrit-adipatoleat;
b) Herstellung eines Produkts aus einem biologisch verträglichen Material aus der plastifizierten PVC-Zusammensetzung; und
c) Sterilisieren des erhaltenen Produkts, vorzugsweise durch Bestrahlen mit durchdringenden Strahlen.

8. Verfahren nach Anspruch 5 oder 6, dadurch gekennzeichnet, daß der Stabilisator ein Gemisch von Calciumstearat und Zinkstearat ist.

9. Verfahren nach Anspruch 5 oder 6, dadurch gekennzeichnet, daß der Stabilisator ein Gemisch von Calciumstearat und Zinkoctanoat ist.

10. Blutleitungen auf Basis der Polyvinylchlorid-Zusammensetzung, wie sie in einem der Ansprüche 1 bis 5 definiert ist.

## Claims

1. Use of a polyvinyl chloride (PVC) composition containing, as a percentage of its total weight:
- 50 to 75% of PVC resin;
- 20 to 45% of at least one alkyl ester of adipic acid;
- 2.5 to 4.5% of at least one lubricant-stabilizer chosen from the group comprising the epoxidized triglycerides;
- 0.6 to 1.5% of one or more stabilizers chosen from the group comprising calcium and zinc salts;
- 0 to 0.1% of polyolefin waxes;
- and 0.05 to 0.5% of pentaerythritol esters;
for the production of products made from biocompatible material, in particular blood lines, to increase the resistance of these products to irradiation with penetrating rays.

2. Use, according to Claim 1, characterized in that the PVC composition contains, as a percentage of its total weight:
- 50 to 75% of PVC resin;
- 20 to 45% of di(2-ethylhexyl)adipate;
- 2.5 to 4.5% of epoxidized soya bean oil;
- 0.6 to 1.5% of one or more stabilizers chosen from the group comprising calcium and zinc salts;
- 0 to 0.1% of polyolefin waxes;
- and 0.05 to 0.5% of pentaerythritol adipate oleate.

3. Use, according to Claim 2, characterized in that the PVC composition contains, as a percentage of its total weight:
- 56 to 72% of PVC resin;
- 21 to 40% of di(2-ethylhexyl)adipate;
- 2.8 to 4.5% of epoxidized soya bean oil;
- 0.6 to 1.5% of stabilizers chosen from the group comprising calcium and zinc salts;
- 0.02 to 0.1% of polyolefin waxes;
- and 0.1 to 0.5% of pentaerythritol adipate oleate.

4. Use according to Claim 1, 2 or 3, characterized in that the stabilizer is a mixture of calcium stearate and zinc stearate.

5. Use according to Claim 1, 2 or 3, characterized in that the stabilizer is a mixture of calcium stearate and zinc octanoate.

6. Process for the manufacture of products made from biocompatible material with enhanced resistance to irradiations of penetrating rays from a plasticized polyvinyl chloride (PVC) composition, characterized in that it comprises the steps of:
a) preparing a plasticized PVC composition from, as a percentage by weight relative to the total weight of the composition:
- 50 to 75% of PVC resin;
- 20 to 45% of at least one alkyl ester of adipic acid;
- 2.5 to 4.5% of at least one lubricant-stabilizer chosen from the group comprising the epoxidized triglycerides;
- 0.6 to 1.5% of one or more stabilizers chosen from the group comprising calcium and zinc salts;
- 0 to 0.1% of polyolefin waxes;
- and 0.05 to 0.5% of pentaerythritol esters;
b) manufacturing a product made from biocompatible material from the plasticized PVC composition;
c) sterilizing the product obtained, preferably by irradiation of penetrating rays.

7. Process for the manufacture of products made from biocompatible material with enhanced resistance to irradiations of penetrating rays from a plasticized polyvinyl chloride (PVC) composition, characterized in that it comprises the steps of:
a) preparing a plasticized PVC composition from, as a percentage by weight relative to the total weight of the composition:
- 50 to 75% of PVC resin;
- 20 to 45% of di(2-ethylhexyl)adipate;
- 2.5 to 4.5% of epoxidized soya bean oil;
- 0.6 to 1.5% of one or more stabilizers chosen from the group comprising calcium and zinc salts;
- 0 to 0.1% of polyolefin waxes;
- and 0.05 to 0.5% of pentaerythritol adipate oleate;
b) manufacturing a product made from biocompatible material from the plasticized PVC composition;
c) sterilizing the product obtained, preferably by irradiation of penetrating rays.

8. Process according to Claim 5 or 6, characterized in that the stabilizer is a mixture of calcium stearate and zinc stearate.

9. Process according to Claim 5 or 6, characterized in that the stabilizer is a mixture of calcium stearate and zinc octanoate.

10. Blood lines made from polyvinyl chloride (PVC) composition defined in any of claims 1 to 5.
